(19) Europäisches Patentamt / European Patent Office / Office européen des brevets

(11) **EP 4 645 488 A1**

(12) **EUROPÄISCHE PATENTANMELDUNG**

(43) Veröffentlichungstag:
**05.11.2025 Patentblatt 2025/45**

(21) Anmeldenummer: **25172565.1**

(22) Anmeldetag: **25.04.2025**

(51) Internationale Patentklassifikation (IPC):
**H01M 10/04** (2006.01)   **H01M 10/0583** (2010.01)

(52) Gemeinsame Patentklassifikation (CPC):
**H01M 10/0404; H01M 10/0459; H01M 10/0583;**
B65H 2301/4216

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **02.05.2024 EP 24173932**

(71) Anmelder: **Grob-Werke GmbH & Co. KG**
**87719 Mindelheim (DE)**

(72) Erfinder:
• **Michl, Karl**
  **87746 Erkheim (DE)**
• **Herb, Johannes**
  **86807 Buchloe (DE)**
• **Janusch, Tim**
  **87746 Erkheim (DE)**

(74) Vertreter: **KASTEL Patentanwälte PartG mbB**
**St.-Cajetan-Straße 41**
**81669 München (DE)**

(54) **VORRICHTUNG UND VERFAHREN ZUM Z-FÖRMIGEN ZUFÜHREN EINER SEPARATORBAHN ZU EINEM STAPELPROZESS MIT BAHNSPANNUNGSSTEUERUNG**

(57)   Um die Zuführung eines Separators zu eine Z-Faltprozess bei der Batteriezellherstellung hinsichtlich Qualität und Taktzeit zu verbessern wird der Separator mit folgenden Schritten zugeführt:

a) Zuführen einer Separatorbahn (16) mit einer ersten Bahnspannung zu einer Bahnspannungsübersetzungseinheit (20), die einen Bahnverlauf der Separatorbahn in Abschnitte (38, 40) mit unterschiedlichen Bahnspannungen aufteilt;

b) Führen der Separatorbahn (16) von der Bahnspannungsübersetzungseinheit (20) mit einer zweiten Bahnspannung zu einer Separatorführungseinheit (24);

c) Z-förmiges Zuführen der Separatorbahn (16) mittels Hin- und Herbewegung der Separatorführungseinheit (24) zum Stapeln der Batteriezelle; und

d) Steuern der zweiten Bahnspannung abhängig von der Position der Separatorführungseinheit (24).

Außerdem werden Einrichtungen (14), Vorrichtungen (10), Steuerungen (54) und Computerprogramme zum Durchführen des Zuführens vorgeschlagen.

Fig. 1

**Beschreibung**

Die Erfindung betrifft eine Separatorbahnzuführeinrichtung für eine Batteriezellherstellvorrichtung zum Herstellen von Batteriezellen mittels Z-Faltens, wobei die Separatorbahnzuführeinrichtung zum Z-förmigen Zuführen einer Separatorbahn zu einer Stapeleinrichtung der Batteriezellherstellvorrichtung ausgebildet ist. Weiter betrifft die Erfindung eine Batteriezellherstellvorrichtung zum Herstellen von Batteriestapeln mittels Z-Falten, umfassend eine derartige Separatorbahnzuführeinrichtung. Weiter betrifft die Erfindung ein Separatorbahnzuführverfahren zum Z-förmigen Zuführen einer Separatorbahn zu einem Z-Faltungsprozess beim Herstellen einer Batteriezelle mittels Z-Faltens sowie ein Batteriezellherstellverfahren unter Einsatz eines solchen Separatorbahnzuführverfahrens. Außerdem betrifft die Erfindung eine computerimplementierte Steuerung sowie ein Computerprogramm mit Anweisungen zum Durchführen derartiger Verfahren.

Zum technologischen Hintergrund wird auf folgende Literaturstellen verwiesen:

[1] EP 3 858 771 A1
[2] EP 4 258 402 A1
[3] WO 2023/072343 A1
[4] EP 2 770 569 A2
[5] DE 10 2018 200 958 A1
[6] US 2012/0110836 A1

Aus den Literaturstellen [2] bis [6] sind Verfahren und Vorrichtungen zum Herstellen von Batteriezellen mittels Z-Faltens bekannt. Insbesondere weist die aus [3] bekannte Batteriezellherstellvorrichtung zum Herstellen von Batteriezellen mittels Z-Faltens eine Stapeleinrichtung und eine Separatorbahnzuführeinrichtung zum Z-förmigen Zuführen einer Separatorbahn zu der Stapeleinrichtung auf, wobei die Separatorbahnzuführeinrichtung eine Separatorbahnzuliefereinrichtung und eine Separatorführungseinheit aufweist, wobei die Separatorbahnzuliefereinrichtung zum Zuliefern der Separatorbahn zu der Separatorführungseinheit ausgebildet ist und wobei die Separatorführungseinheit zum Durchführen des Z-Faltens hin und her bewegbar ist.

Das sogenannte Z-Falten, wie z.B. aus [2] bis [6] bekannt, stellt einen Hauptprozess für die Batteriezellassemblierung dar. Dabei werden abwechselnd Anoden und Kathoden übereinandergestapelt. Ein Separator trennt hierbei die jeweiligen Anoden und Kathoden voneinander und verläuft wie ein Z durch den Stapel. So kommt auch die Namensgebung Z-Falten für diese Variante der Batteriezellherstellung zustande. Ein Bahnlauf ist hierfür für die Bereitstellung des Separatormaterials verantwortlich und essenziell. An die Qualität der Batteriezelle stellen die jeweiligen Nutzer derartiger Vorrichtungen und Verfahren verschiedenste Anforderungen. Spezielle Anforderungen an die Qualität mit Bezug zum Separator sind unter anderem Vermeidung von Beschädigungen im Allgemeinen (beispielsweise durch lokale Überbelastungen hervorgerufen), von unerwünschten Faltenbildungen oder Beibehaltung des vorgegebenen Überstands zu den Elektroden (Anode, Kathode). Deswegen stellen der Bahnlauf und die Materialeigenschaften des Separators eine Herausforderung dar, um diesen in der gewünschten Qualität aber auch Taktzeit in den Stapel einzubringen.

Jede derzeit bekannte Prozessanlage für die Batteriezellherstellung mittels der Z-FaltTechnik hat eine Separatorbahnführung als wichtigen Bestandteil der Gesamtanlage. Am Beispiel der aus der [3] bekannten Separatorbahnführung werden im Folgenden einige Herausforderungen erläutert. Beispielsweise ist die Separatorführungseinheit hierbei unter anderem fest mit den Stacking-Movern der Elektroden gekoppelt, was zum einen zu einer größeren Dynamik innerhalb des Bahnlaufs führt und zum anderen eine Entkopplung der Systeme zur Generierung eines idealisierten Verfahrprofils zwischen Separatorführungseinheit (verbesserte Taktzeitaufteilung zwischen den Teilprozessen) verwehrt.

Aus der Literaturstelle [1] ist ein Verfahren zur Steuerung einer Bahnspannung bei der Herstellung von Batteriezellen bekannt. Die Literaturstelle [1] hat aber keinen Bezug zum Z-Falten. Die im Prozess des Z-Faltens auftretenden zyklisch stark schwankenden Bahnlängenänderungen stellen erhöhte Anforderungen an integrierte Tänzereinheiten zur Kompensation eben solcher Bahnlängenänderungen. Die Literaturstelle [1] offenbart zwar verbesserte Regelalgorithmen durch kaskadierte Kraftregelung. Diese stellen für Z-Faltung aber keine zufriedenstellende technische und den Anforderungen genügende Lösung dar. Eine Reaktion würde hier stehts eine detektierte Regelabweichung voraussetzen, was bei einer durchschnittlichen Reglertaktung von 4ms und Bandbreiten im Bereich 100Hz bei für Ausführungen der Erfindung angestrebten 0,35 Sekunden oder weniger Sheet-to-Sheet Zeit deutlich zu träge ist. Die bei der inneren Drehzahlregelung eingebrachte intrinsische Dämpfung des Systems erhöht zwar die Robustheit und Bandbreite der Tänzerregelung, wäre somit aber durch die geforderte Dynamik durch geringe Aggressivität der Störunterdrückung genau kontraproduktiv.

Die Erfindung hat sich zur Aufgabe gestellt, Einrichtungen, Vorrichtungen und/oder Verfahren zur Verfügung zu stellen, mit denen sich das Zuführen einer Separatorbahn zum Z-Falten in einen Batteriestapel, insbesondere hinsichtlich Qualität und/oder Taktzeit verbessern lässt.

Zum Lösen dieser Aufgabe schafft die Erfindung eine Separatorbahnzuführeinrichtung gemäß Anspruch 1 sowie ein Separatorbahnzuführverfahren gemäß Anspruch 9. Verfahren und Vorrichtungen zur Batteriezellherstellung mittels Z-Faltens unter Einsatz der Separatorbahnzuführeinrichtung bzw. des Separatorbahnzuführverfahrens sowie eine zum Durchführen ausgebildete Steuerung und ein Computerprogramm mit Anweisungen hierfür sind Gegenstand der weiteren unabhängigen Ansprüche.

Vorteilhafte Ausgestaltungen sind Gegenstand der Unteransprüche.

Die Erfindung schafft gemäß einem ersten Aspekt eine Separatorbahnzuführeinrichtung für eine Batteriezellherstellvorrichtung zum Herstellen von Batteriezellen mittels Z-Faltens, wobei die Separatorbahnzuführeinrichtung zum Z-förmigen Zuführen einer Separatorbahn zu einer Stapeleinrichtung der Batteriezellherstellvorrichtung ausgebildet ist und eine Separatorbahnzuliefereinrichtung, eine Bahnspannungsübersetzungseinheit, eine positionsgesteuerte Bahnspannungssteuereinheit und eine Separatorführungseinheit aufweist,

wobei die Separatorbahnzuliefereinrichtung zum Zuliefern der Separatorbahn zu der Bahnspannungsübersetzungseinheit ausgebildet ist,
wobei die Separatorbahn über die Bahnspannungsübersetzungseinheit zu der Separatorführungseinheit geführt ist,
wobei die Bahnspannungsübersetzungseinheit dazu ausgebildet ist, den Bahnverlauf der Separatorbahn in der Separatorbahnzuführeinrichtung in Abschnitte mit unterschiedlichen Bahnspannungen derart aufzuteilen, dass die Separatorbahn in einem in Bewegungsrichtung vor der Bahnspannungsübersetzungseinheit liegenden ersten Abschnitt eine erste Bahnspannung hat und in einem in Bewegungsrichtung nach der Bahnspannungsübersetzungseinheit liegenden zweiten Abschnitt eine zweite Bahnspannung hat,
wobei die Separatorführungseinheit zum Durchführen des Z-Faltens hin und her bewegbar ist, und wobei die positionsgesteuerte Bahnspannungssteuereinheit dazu eingerichtet ist, die zweite Bahnspannung abhängig von der Position der Separatorführungseinheit zu steuern.

Als "Bahnspannungsübersetzungseinheit" wird somit eine Vorrichtung zum Aufteilen des Bahnverlaufs in Abschnitte mit unterschiedlichen Bahnspannungen bezeichnet.

Bei einigen Ausführungsformen ist vorgesehen, dass die Separatorbahnzuliefereinrichtung einen Abwickler für die Separatorbahn aufweist, der dazu ausgebildet ist, die Separatorbahn mit einer vorbestimmten konstanten oder variierenden Bahngeschwindigkeit für den Z-Faltprozess von einer Separatorbahnvorratsrolle abzuwickeln.

Bei einigen Ausführungsformen weist die Separatorbahnzuführeinrichtung eine erste Tänzereinheit zum Einstellen und/oder Regeln der ersten Bahnspannung auf einen konstanten vorbestimmten Wert auf.

Bei einigen Ausführungsformen weist die Separatorbahnzuführeinrichtung eine Bahnverlaufkorrektoreinheit auf, die dazu eingerichtet ist, einem außermittigen Verlauf der Separatorbahn entgegenzuwirken.

Bei einigen Ausführungsformen ist die Bahnspannungsübersetzungseinheit dazu ausgebildet, den Bahnlauf in zwei Bahnspannungsabschnitte mit verschiedenen Bahnspannungen aufzuteilen, wobei die bezüglich der Bewegungsrichtung der Separatorbahn vor der Bahnspannungsübersetzungseinheit vorliegende erste Bahnspannung größer als die bezüglich der Bewegungsrichtung nach der Bahnspannungsübersetzungseinheit vorliegende zweite Bahnspannung ist.

Die Bahnspannungsübersetzungseinheit ist vorzugsweise dazu ausgebildet, den Bahnverlauf der Separatorbahn in wenigstens zwei unterschiedliche Bahnspannungsbereichen aufzuteilen, um gleichzeitig einem starken Durchhängen des Separators entgegenzuwirken (Bereich mit höherer Bahnspannung) sowie während des intermittierenden Stackingprozesses die Gesamtbelastung auf den Separator, inklusive Bahnspannungsimpulse auf den bereits aufgebauten bzw. sich im Aufbau befindlichen Stack, gering zu halten (Bereich mit reduzierter Bahnspannung).

Bevorzugte Ausgestaltungen der Bahnspannungsübersetzungseinheit weisen wenigstens eine Triebeinheit auf, wobei die Triebeinheit eine angetriebene Walze, die z.B. als Förderwalze oder Antriebswalze bezeichnet wird, und zwei nicht-angetriebene Umlenkwalzen aufweist. Dabei ist die angetriebene Walze von der Separatorbahn mit einem vorbestimmten Umschlingungswinkel umschlungen, der insbesondere mittels der zwei nichtangetriebenen Umlenkwalzen eingestellt werden kann.

Dadurch kann eine im Wesentlichen homogene Druckverteilung auf die Separatorbahn erzeugt werden, um die auf die Separatorbahn wirkende Bahnspannung zu ändern. Somit kann mit einer solchen Bahnspannungsübersetzungseinheit eine inhomogene Druckverteilung auf die Separatorbahn verhindert werden, wie sie bspw. durch eine Klemmeinheit mit zwei aufeinandergepressten Walzen, zwischen denen die Separatorbahn hindurchgeführt wird, erzeugt wird. Theoretisch ergibt eine solche Klemmeinheit eine Linienbelastung auf den zwischen den Walzen hindurchgeführten Separator. Untersuchungen haben jedoch ergeben, dass tatsächlich dann nur ein Klemmen in den äußersten Bereichen der Separatorbahn vorhanden ist, und somit eine inhomogene Druckverteilung vorliegt.

Bei einigen Ausführungsformen sind die angetriebene Walze und die zwei Umlenkwalzen einer Triebeinheit bezüglich der Bewegungsrichtung der Separatorbahn alternierend angeordnet.

Gemäß einer Ausführungsform sind die zwei Umlenkwalzen relativ zur angetriebenen Walze versetzt, also außermittig, angeordnet.

Mit "versetzt" angeordnet ist hierbei gemeint, dass die Mittelpunkte der Walzen nicht auf einer Geraden liegen, bzw. die Walzen in unterschiedlichen Ebenen angeordnet sind. Insbesondere sind die zwei Umlenkwalzen in derselben Ebene angeordnet, und die angetriebene Walze ist in einer dazu parallel angeordneten Ebene angeordnet.

Bei einigen Ausführungsformen beeinflusst bzw. ändert die Bahnspannungsübersetzungseinheit die Bahnspannung gemäß nachfolgender Formel (1):

$$\frac{F_{in}}{F_{out}} < e^{n*\mu*\alpha} \qquad (1),$$

mit

$F_{in}$ = Kraft, aus der die erste Bahnspannung resultiert;
$F_{out}$ = Kraft, aus der die zweite Bahnspannung resultiert;
n = Anzahl der Triebeinheiten;
μ = Reibwert zwischen angetriebener Walze und Separatorbahn; und
α = Umschlingungswinkel der Separatorbahn um die angetriebene Walze.

Das bedeutet, dass ein Verhältnis der Kräfte für die erste Bahnspannung und die zweite Bahnspannung, und somit ein Verhältnis der ersten und der zweiten Bahnspannung durch die Anzahl der in der Bahnspannungsübersetzungseinheit beinhalteten Triebeinheiten, dem Reibwert zwischen angetriebener Walze(n) und Separatrbahn sowie dem Umschlingungswinkel der Separatorbahn um die jeweilige angetrieben Walze. Der Reibwert zwischen angetriebener Walze und Separatorbahn kann bspw. mit Beschichtungen auf der angetriebenen Walze eingestellt werden.

Gemäß einer Ausführungsform ist der Umschlingungswinkel über die Positionen der Umlenkwalzen relativ zur angetriebenen Walze einstellbar.

Bei einigen Ausführungsformen weist die positionsgesteuerte Bahnspannungssteuereinheit eine positionsgesteuerte Tänzereinheit zum Steuern der zweiten Bahnspannung abhängig von der Position der Separatorführungseinheit auf. Insbesondere wird dabei die Position der Tänzereinheit derart gewählt, dass die zweite Bahnspannung unabhängig von der Position der Separatorführungseinheit im Wesentlichen konstant bleibt. Es ist aber auch möglich, die Position der Tänzereinheit derart zu wählen, dass die zweite Bahnspannung einen vorbestimmten Wert aufweist. Mit anderen Worten kann man sagen, dass die Position der Tänzereinheit abhängig von der Position der Separatorführungseinheit ist, und so gewählt wird, dass die zweite Bahnspannung für jede Position der Separatorführungseinheit einen vorbestimmten Wert aufweist, und insbesondere im Wesentlichen konstant gehalten wird.

Bei einigen Ausführungsformen weist die positionsgesteuerte Bahnspannungssteuereinheit eine Feinstkompensationseinheit zum Kompensieren von bei dem Steuern der zweiten Bahnspannung auftretenden Bahnspannungsschwankungen, insbesondere aufgrund von Modellierungsungenauigkeiten, wie bspw. Fertigungstoleranzen und/oder Ausregeltoleranzen, auf. Somit ermöglicht die Feinstkompensationseinheit eine noch feinere Steuerung bzgl. der zweiten Bahnspannung und kann somit ein Konstanthalten der zweiten Bahnspannung weiter verbessern.

Bei einigen Ausführungsformen weist die positionsgesteuerte Bahnspannungssteuereinheit eine Rechnereinheit mit einem Speicher auf, in dem eine vorbestimmte Beziehung zwischen Position der Separatorführungseinheit und a) dem Wert der zweiten Bahnspannung und/oder b) einer Stellung eines Spannungseinstellelements gespeichert ist. Es können unterschiedlichen Spannungseinstellungselemente vorgesehen sein, die die Spannung der Separatorbahn in dem zweiten Bahnspannungsabschnitt beeinflussen. Insbesondere ist als Spannungseinstellungselement ein Tänzerelement, weiter insbesondere die Feinstkompensationseinheit, vorgesehen.

Bei einigen Ausführungsformen ist die positionsgesteuerte Bahnspannungssteuereinheit zum Vorsteuern der zweiten Bahnspannung ausgebildet. Die Positionsbeziehung zwischen der Tänzereinheit, insbesondere der Tänzerachse, und der Separatorführungseinheit kann vorab berechnet werden. Auf dieser Berechnung basiert dann die Steuerung der zweiten Bahnspannung über die positionsgesteuerte Bahnspannungssteuereinheit, was auch als Vorsteuern bezeichnet wird. Darüber hinaus ist es auch denkbar, die Bahnspannung in Echtzeit zu bestimmen, insbesondere zu berechnen, und darauf basierend die positionsgesteuerte Bahnspannungssteuereinheit, insbesondere die Feinstkompensationseinheit, entsprechend zu regeln, so dass die zweite Bahnspannung im Wesentlichen konstant gehalten wird.

Bei einigen Ausführungsformen weist die positionsgesteuerte Bahnspannungssteuereinheit als Spannungseinstellelement eine Umlenkwalze, die an einem Ausleger oder Lagerschild mit radialem Abstand zu einer Welle gelagert ist, und einen positionsgesteuerten Motor zum Verdrehen der Welle und zum Schwenken des Auslegers oder des Lagerschilds auf. Das Spannungseinstellelement ist insbesondere die positionsgesteuerte Tänzereinheit.

Bei einigen Ausführungsformen weist die Separatorbahnzuführeinrichtung eine Separatorführungseinrichtung auf, die die Separatorführungseinheit und einen Bewegungsmechanismus zum gesteuerten Verfahren der Separatorführungseinheit aufweist.

Bei einigen Ausführungsformen ist vorgesehen, dass die Separatorführungseinheit eine erste und eine zweite Führungswalze zum Führen der Separatorbahn dazwischen aufweist und der Bewegungsmechanismus zum gesteuerten gemeinsamen Verfahren der ersten und zweiten Führungswalze in Richtung quer zu deren Mittelachsen ausgebildet ist.

Bei einigen Ausführungsformen ist vorgesehen, dass der Bewegungsmechanismus eine erste Bewegungseinheit zum Bewegen eines an einem ersten Randbereich der Separatorbahn angreifenden ersten Bereichs der Separatorführungseinheit und eine zweite Bewegungseinheit zum Bewegen eines an einem zweiten Randbereich der Separatorbahn angreifenden zweiten Bereichs der Separatorführungseinheit aufweist und dazu ausgebildet ist, die erste und die zweite Bewegungseinheit synchron oder relativ zueinander voreilend oder nacheilend zu verfahren.

Gemäß einem weiteren Aspekt schafft die Erfindung eine Batteriezellherstellvorrichtung zum Herstellen von Batteriestapeln mittels Z-Falten, umfassend eine Separatorbahnzuführeinrichtung nach einer der voranstehenden Ausgestaltungen und eine Stapeleinrichtung zum wechselweisen Stapeln erster und zweiter Elektroden mit Z-förmig eingefügter Separatorbahn dazwischen.

Es ist bevorzugt, dass die Stapeleinrichtung einen absenkbaren Stapeltisch umfasst, der dazu ausgebildet ist, durch Absenken immer die gleiche Ablagehöhe der jeweils zugeführten Elektrode und des dazwischen gefügten Separators zu ermöglichen. Der absenkbare Stapeltisch ermöglicht es, dass die Stapeloberkante, immer an gleicher Position verweilt. Somit kann ein sich ständig zyklisch wiederholendes Verfahrprofil über den kompletten Stapelprozess aufgeprägt werden.

Gemäß einem weiteren Aspekt schafft die Erfindung ein Separatorbahnzuführverfahren zum Z-förmigen Zuführen einer Separatorbahn zu einem Z-Faltungsprozess beim Herstellen einer Batteriezelle mittels Z-Faltens, umfassend

a) Zuführen einer Separatorbahn mit einer ersten Bahnspannung zu einer Bahnspannungsübersetzungseinheit, die einen Bahnverlauf der Separatorbahn in Abschnitte mit unterschiedlichen Bahnspannungen aufteilt;
b) Führen der Separatorbahn von der Bahnspannungsübersetzungseinheit mit einer zweiten Bahnspannung zu einer Separatorführungseinheit;
c) Z-förmiges Zuführen der Separatorbahn mittels Hin- und Herbewegung der Separatorführungseinheit zum Stapeln der Batteriezelle; und
d) Steuern der zweiten Bahnspannung abhängig von der Position der Separatorführungseinheit.

Bei einigen Ausführungsformen umfasst Schritt a) den Schritt:
a1) Abwickeln der Separatorbahn von einer Vorratsrolle mit vorbestimmter oder konstanter oder variierender Bahngeschwindigkeit.

Bei einigen Ausführungsformen umfasst Schritt a) den Schritt:
a2) Steuern oder Regeln der ersten Bahnspannung auf einen vorbestimmten Wert.

Bei einigen Ausführungsformen umfasst Schritt a) den Schritt:
a3) Einstellen der ersten Bahnspannung auf einen Wert, der höher als die zweite Bahnspannung ist.

Bei einigen Ausführungsformen umfasst Schritt a) den Schritt:
a4) Einstellen der ersten Bahnspannung mittels einer ersten Tänzereinheit.

Bei einigen Ausführungsformen umfasst Schritt a) den Schritt:
a5) Einstellen oder Korrektur der Position der zuzuführenden Separatorbahn quer zu ihrer Bewegungsrichtung.

Bei einigen Ausführungsformen umfasst Schritt a) den Schritt:
a6) Detektion der Position einer Kante der Separatorbahn, Korrektur der Position der zuzuführenden Separatorbahn abhängig von der detektierten Position mittels Winkeleinstellung einer oder mehrerer Führungsrollen, über die die Separatorbahn zugeführt wird.

Bei einigen Ausführungsformen umfasst Schritt b) den Schritt:
b1) Einstellen eines Verhältnisses zwischen erster und zweiter Bahnspannung mittels Reibung an wenigstens einer Triebeinheit der Bahnspannungsübersetzungseinheit und mittels Einstellens eines Umschlingungswinkels der Separatorbahn um die angetriebene Walze der wenigstens einen Triebeinheit.

Hierbei wird die Reibung insbesondere durch den Reibkoeffizienten zwischen der angetriebenen Walze und der Separatorbahn bestimmt. Das bedeutet, dass der Reibkoeffizient über die Materialpaarung "angetriebene Walze - Separatorbahn" festgelegt werden kann.

Bei einigen Ausführungsformen umfasst Schritt b) den Schritt:
b2) schlupffreies Antreiben der angetriebenen Walze der wenigstens einen Triebeinheit der Bahnspannungsübersetzungseinheit.

Bei einigen Ausführungsformen umfasst Schritt b) den Schritt:
b3) Führen der Separatorbahn nacheinander um bzw. durch mehrere Triebeinheiten.

Bei einigen Ausführungsformen umfasst Schritt c) den Schritt:
c1) Führen der Separatorbahn zwischen einem Paar gemeinsam hin- und her bewegbarer Walzen der Separatorführungseinheit.

Bei einigen Ausführungsformen umfasst Schritt c) den Schritt:
c2) Bewegen der Separatorführungseinheit entsprechend eines vorgegebenen Bewegungsmusters.

Bei einigen Ausführungsformen umfasst Schritt c) den Schritt:
c3) Zuführen der Separatorbahn immer auf der gleichen Höhe zu einem Batteriezellstapel, wobei der Batteriezellstapel entsprechend vertikal nachgeführt wird.

Mit anderen Worten kann man sagen, dass die Separatorbahn dem Batteriezellstapel - unabhängig von der Stapelhöhe des Batteriezellstapels - immer auf derselben Höhe zugeführt wird. Das bedeutet, dass der Batteriezellstapel nach und nach, insbesondere Lage für Lage, während des Aufbaus vertikal nachgeführt wird, z.B. indem der Stapeltisch nach und nach vertikal nach unten verfahren wird, immer so weit, dass die Separatorbahn immer auf derselben Höhe dem Batteriezellstapel zugeführt wird. Insbesondere wird dabei auch eine im Wesentlichen gleichbleibende Relativposition zwischen Separatorbahnzuführung und Oberseite des (sich im Aufbau befindlichen) Batteriestapels gewährleistet.

Bei einigen Ausführungsformen umfasst Schritt c) den Schritt:
c4) Bewegen eines an einem ersten Randbereich der Separatorbahn angreifenden ersten Bereichs der Separatorführungseinheit und Bewegen eines an einem zweiten Randbereich der Separatorbahn angreifenden zweiten Bereichs der Separatorführungseinheit derart, dass der erste und zweite Bereich synchron oder relativ zueinander voreilend oder nacheilend verfahren werden.

Bei einigen Ausführungsformen umfasst Schritt d) den Schritt:
d1) Bestimmen einer Beziehung oder Kurve zwischen Position der Separatorführungseinheit und Wert der zweiten Bahnspannung mittels Simulation.

Bei einigen Ausführungsformen umfasst Schritt d) den Schritt:
d2) Bestimmen einer Beziehung oder Kurve zwischen Position der Separatorführungseinheit und Position oder Stellung eines Spannungseinstellelements mittels Simulation.

Bei einigen Ausführungsformen umfasst Schritt d) den Schritt:
d3) Vorbestimmen einer Beziehung oder Kurve zwischen Position der Separatorführungseinheit und Wert der zweiten Bahnspannung und/oder Position eines Spannungseinstellelements und Steuern der zweiten Bahnspannung gemäß der vorbestimmten Beziehung oder Kurve entsprechend der aktuellen Position der Separatorführungseinheit.

Bei einigen Ausführungsformen umfasst Schritt d) den Schritt:
d4) Ermitteln einer Beziehung oder Kurve zwischen Position der Separatorführungseinheit und Wert der zweiten Bahnspannung und/oder Position/Stellung eines Spannungseinstellelements durch Vergleich mit einer Regelung, die die zweite Bahnspannung auf einen gewünschten Wert regelt und Abgleich mit der jeweils aktuellen Position der Separatorführungseinheit.

Bei einigen Ausführungsformen umfasst Schritt d) den Schritt:
d5) Konstanthalten einer vorbestimmten zweiten Bahnspannung bei unterschiedlichen Positionen der Separatorführungseinheit.

Bei einigen Ausführungsformen umfasst Schritt d) den Schritt:
d6) positionsgemäßes Steuern der zweiten Bahnspannung mittels einer positionsgesteuerten Tänzereinheit.

Bei einigen Ausführungsformen umfasst Schritt d) den Schritt:
d7) Bewegen einer Tänzereinheit in Abhängigkeit von der Position der Separatorführungseinheit, insbesondere so, dass die zweite Bahnspannung auf einem vorbestimmten, vorzugsweise konstanten Wert gehalten wird.

Bei einigen Ausführungsformen umfasst Schritt d) den Schritt:
d8) Bereitstellen einer mit radialem Abstand zu einem Zentrum drehbar gelagerten Umlenkrolle und Einstellen der Winkellage der Drehachse der Umlenkrolle zu dem Zentrum abhängig von der Position der Separatorführungseinheit.

Bei einigen Ausführungsformen umfasst Schritt d) den Schritt:
d9) Ausgleichen von bei der Steuerung der zweiten Bahnspannung auftretenden Bahnspannungsschwankungen.

Gemäß einem weiteren Aspekt schafft die Erfindung eine Steuerung für eine Separatorbahnzuführeinrichtung oder Batteriezellherstellvorrichtung nach einer der voranstehenden Ausgestaltungen, wobei die Steuerung dazu eingerichtet ist, die Separatorbahnzuführeinrichtung zum Durchführen des Verfahrens nach einem der voranstehenden auf das Verfahren bezogenen Ausgestaltungen anzusteuern.

Gemäß einem weiteren Aspekt schafft die Erfindung ein Computerprogramm enthaltend Anweisungen, die eine Einrichtung oder Vorrichtung nach einer der voranstehenden Ausgestaltungen dazu veranlassen, das Verfahren nach einer der voranstehenden Ausgestaltungen durchzuführen.

Ausgestaltungen der Erfindung betreffen Einrichtungen, Vorrichtungen und Verfahren zum Einsatz bei der Herstellung von Batteriezellen mittels Z-Faltens.

Besonders bevorzugte Ausgestaltungen der Einrichtungen, Vorrichtungen, Verfahren, Steuerungen und Computerprogramme gemäß der Erfindung zielen darauf ab, wenigstens einen, mehrere oder alle der folgenden Nachteile zu vermeiden oder zumindest zu verringern:

- Derzeit bekannte Anordnungen des Bahnlaufes der Separatorbahn erzeugen keine homogene Bahnspannung.

Daraus resultieren Bahnspannungsspitzen, welche im Stapelprozess zu unerwünschten Effekten, wie z.B. zu Separatorpenetration und/oder Falteneinprägung und/oder, insbesondere daraus resultierend, zu Dendritenbildung und/oder Kurzschluss, führen.

- Die Bahnspannungsspitzen erzeugen eine mechanische Beanspruchung in Form von Zugkräften, die zu einem Verlaufen des Separators führen. Um dem Separatorverlauf etwas entgegenwirken zu können, halten bei derzeit verwendeten Lösungen Niederhaltefinger oder dergleichen den Zellstapel mit einer höheren mechanischen Kraft nieder. Die Flächenpressung auf die Elektroden nimmt dadurch zu.
- Die, insbesondere erhöhte Flächenpressung kann Abdrücke auf den Elektroden erzeugen, die zu einer auf mikroskopischen Aufnahmen ersichtlichen Gefügeänderung führen können, was in einer n.i.O-Deklarierung der Elektrode resultieren kann.
- Insbesondere durch die unerwünscht auftretenden Bahnspannungsspitzen sowie durch eine allgemein hohe Bahnspannung wird der Separator bei bisherigen Lösungen mit hoher Kraft um die Niederhaltefinger oder dergleichen gezogen. Dies führt zu sichtlichen Beschädigungen am Separator. Durch die hohe Bahnspannung wird folglich auch beim Herausziehen der Finger oder dergleichen während des Prozesses der Separator beschädigt.
- Durch die mechanische Bahnführung beim eigentlichen Z-Falt-Prozess muss bei bisherigen Lösungen Separatormaterial in den Bahnlauf, entgegen der Abwickelrichtung, zurück gefördert werden. Dies liegt an der sich durch das Z-Faltmuster ergebenden, ungünstigen Separatorführung. Dies erzeugt eine zusätzliche variable Größe innerhalb des Bahnlaufsystems, welche sich nachteilig auf die Dynamik der Separatorbahn, insbesondere mit Bezug auf die Bahnspannung, auswirkt.
- Mit aktuellen Lösungen können die Materialeigenschaften, wie beispielsweise das Dehnverhalten des Separators, nicht berücksichtigt werden. Somit kann der Bahnlauf nicht im gesamten System, hochpräzise überwacht werden, da immer eine ungewisse Menge an Separator im Prozess aufgrund entstehender Dehnungen frei wird.
- Durch unerwünschte, und insbesondere häufig nicht vorhersehbare Bahnspannungssprünge kommt es bei bisherigen Lösungen auch zu gewissen elastischen sowie plastischen Verformungen des Separators, woraus unerwünschte mechanische Inhomogenitäten im Gefüge des Separatormaterials entstehen, welche wiederum Einfluss auf die Qualität der hergestellten Batteriezelle, z.B. bzgl. Hi-Pot-Verhalten → i.O / n.i.O-Stack, Leistungsdichte, Alterung, etc., haben können.

Besonders bevorzugte Ausgestaltungen der Einrichtungen, Vorrichtungen, Verfahren, Steuerungen und Computerprogramme gemäß der Erfindung bieten wenigstens einen, mehrere oder alle der folgenden Vorteile:

- Bahnspannungssprünge werden mit einem neuen Bahnlaufkonzept deutlich reduziert, insbesondere sogar minimiert.
- Verlaufen, d.h., ein zu einer Soll-Ablageposition des Separators versetzte Ablage, des Separators entlang der Länge des Batteriezellstapels wird drastisch reduziert.
- Belastungen auf die Niederhalt-Achsen, also die Niederhaltefinger, wird reduziert. Durch die Belastungsreduzierung werden folglich auch die filigranen Niederhaltefinger weniger stark beansprucht.
- Mittels neuem Bahnlaufkonzept können deutlich geringere Taktzeiten, insbesondere sogenannte "Sheet to Sheet"-Zeiten, insbesondere von etwa 0,4 s bis etwa 0,2 s, weiter insbesondere von etwa 0,35 s bis etwa 0,25 s, angestrebt werden.
- Insbesondere durch die positionsabhängige Bahnspannungssteuereinheit kann die Menge an zurückgeführtem Separator zum einen erheblich reduziert und zum anderen nur auf einen kleinen Systembereich innerhalb des gesamten Bahnlaufsystems beschränkt werden. Dadurch wird eine hoch performante, also sehr komplexe, Auslegung der entsprechenden Teilsysteme vereinfacht, was sich in einer deutlichen Dynamikreduzierung des Bahnlaufs entfaltet.
- Die Materialeigenschaften des Separators können berücksichtigt werden.

Einige Ausführungsformen der Erfindung ermöglichen eine Realisierung eines homogenen Separatorbahnlaufes, also einen Separatorbahnlauf mit nur wenigen oder gar keinen ungewollten Bahnspannungsspitzen bzw. Bahnspannungsschwankungen, der wiederum einen qualitativ hochwertigen Batteriezellstapel als Endprodukt zur Folge hat.

Einige Ausführungsformen der Erfindung ermöglichen deutlich geringere Taktzeiten als bisher auf dem Markt erhältliche Lösungen.

Um die diversen Einflussparameter wie Massenträgheiten und Reibpaarwerte der einzelnen Umlenkwalzen, Materialeigenschaften und Materialverhalten des Separators, zu berücksichtigen, ist zur Realisierung besonders bevorzugter Ausgestaltungen der Einrichtungen, Vorrichtungen und Verfahren gemäß der Erfindung zunächst eine theoretische Betrachtung in Form einer Bahnlauf-Simulation des Komplettsystems durchgeführt worden. Simulationsergebnisse sind insbesondere in Steuerungsabläufe und die entsprechende Software eingeflossen.

Bei einigen Ausgestaltungen der Erfindung werden mittels einer Bahnlaufsimulation sowie dem speziellen Aufbau bzw. Ansatzes des Bahnlaufes gewisse Bewegungsprofile von Tänzern/Achsen ermittelt, welche die Dynamik auf den Separator beim Z-Faltprozess, kompensieren.

Bei der Simulation spielt jeweils das Gesamtsystem mit seiner Anordnung der verschiedenen Komponenten eine gewisse Rolle. Jede einzelne Baugruppe hat bei besonders bevorzugten Ausgestaltungen eine gewisse Aufgabe, die beim Zusammenführen zu einem idealen Bahnlaufkonzept führen.

Beispielsweise können mittels des auf dem Markt erhältlichen Simulationsprogrammes "MapleSim" die Zusammensetzung des idealen Gesamtsystem zunächst simuliert und die jeweiligen Ergebnisse untersucht, verifiziert werden, um dann in die Realität umgesetzt zu werden.

Besonders bevorzugte Ausgestaltungen der Erfindung haben ein angetriebenes positionsgesteuertes Tänzersystem im zweiten Bahnspannungsabschnitt, für welches ein reziprokes Bewegungsprofil ermittelt wird. Dieses System kompensiert den freiwerdenden Separator, gleicht Dehnverhalten durch die Materialeigenschaften (E-Modul) aus, gibt nach Bedarf Material frei und nimmt somit die komplette Dynamik aus dem System.

Erzeugt wird die unerwünschte Dynamik im Bahnlauf von einem kontinuierlich laufenden Abwickler sowie einer Separatorführungseinheit, die zum Ablegen des Separators im Z-Faltmuster, hin- und herfährt und sich somit regelmäßig entgegen der Abwickelrichtung des Abwicklers bewegt, wodurch eine gewisse Länge des Separators zumindest vorübergehend frei wird, also lose, im Wesentlichen ohne Bahnspannung im Gesamtsystem "hängt".

Bei einigen Ausführungsformen ist eine Feinstkompensationseinheit dazu eingerichtet, Schwankungen, die zwischen Simulation und Realität auftreten werden, noch zusätzlich herauszukompensieren.

Bei bevorzugten Ausgestaltungen teilt eine Bahnspannungsübersetzungseinheit auf Basis des Euler-Eytelweinschen Seilreibungsgesetzes den kompletten Separatorstrang in (wenigstens) zwei Bereiche mit unterschiedlichen Bahnspannungen auf.

Einige weitere Vorteile besonders bevorzugter Ausführungsformen der Erfindung sind:

- Bahnspannungsspitzen werden mit einem neuen Bahnlaufkonzept, insbesondere auf ein Minimum, reduziert und die auf die Separatorbahn wirkende Bahnspannung somit homogenisiert.
- Durch eine sich homogen einstellende Bahnspannung wird ein Verlaufen der Separatorbahn entlang des zu bildenden Batteriezellstapels reduziert und somit die Qualität des Batteriestapels erhöht.
- Die benötigte Niederhaltekraft zum Fixieren des Zellstapels mittels der NiederhalteAchsen, also den Niederhaltefingern, wird herabgesetzt.
- Durch die Reduzierung der Niederhaltekraft werden folglich die filigranen Niederhaltefinger weniger stark mechanisch beansprucht. Dies hat wiederum Auswirkungen auf die Material- sowie konstruktive Gestaltungsfreiheit dieser Finger.
- Mittels neuem Bahnlaufkonzept können deutlich geringere Taktzeiten (Sheet to Sheet-Zeiten) angestrebt werden, wobei dies keine Auswirkung auf die Ablagequalität des Separators hat. Mittels der geringeren Taktzeiten kann die Anzahl der Maschinen reduziert und somit der entscheidende Faktor Footprint bei großen Anlagen ebenso verringert werden. Der Footprint, d.h., wie viel GWh auf wie viel Fläche produziert werden kann, genießt bei den Batterieherstellern eine sehr hohe Priorität und ist somit ein nicht zu unterschätzender Faktor für den Verkauf der Maschinen.
- Es muss aufgrund der geometrischen Anordnung kaum Separator-Material beim Stapelprozess in den Bahnlauf zurückgeführt werden, was zu einer deutlichen Dynamikreduzierung und Beruhigung des Separatorbahnlaufs führt.
- Aufgrund einer homogenisierten Bahnspannung sowie den kleineren Niederhaltekräften und der daraus resultierenden Abnahme der Flächenpressung wird der Gefahr von mechanischen Beschädigungen auf die Batteriezelle, insbesondere auf die durch die Niederhaltefinger niedergehaltenen Elektroden, deutlich entgegengewirkt.
- Den geringen und homogenisierten Bahnzug kommt auch die Belastung auf dem Separator beim Umschlag um die Niederhaltefinger sowie bei deren Herausziehen während des Prozesses zugute. Die Gefahr einer unerwünschten Zellbeschädigung nimmt ab.

Ausführungsbeispiele werden im Folgenden anhand der beigefügten Zeichnungen näher erläutert. Darin zeigt:

Fig. 1 eine Übersichtsdarstellung einer Ausführungsform einer Batteriezellherstellvorrichtung mit Stapeleinrichtung und Separatorbahnzuführeinrichtung in einer Ansicht von der Seite gesehen;

Fig. 2 eine schematische Prinzipdarstellung, die eine Wirkprinzip einer Bahnspannungsübersetzungseinheit der Separatorbahnzuführeinrichtung der Batteriezellherstellvorrichtung von Fig. 1 erläutert;

Fig. 3 eine perspektivische Ansicht einer beispielhaften Ausgestaltung der Bahnspannungsübersetzungseinheit;

Fig. 4 eine perspektivische Ansicht einer beispielhaften Ausgestaltung einer positionsgesteuerten Bahnspannungssteuereinheit der Separatorbahnzuführeinrichtung der Batteriezellherstellvorrichtung von Fig. 1;

Fig. 5    eine perspektivische Ansicht einer beispielhaften Ausgestaltung einer Separatorführungseinheit der Separatorbahnzuführeinrichtung der Batteriezellherstellvorrichtung von Fig. 1;

Fig. 6    eine perspektivische Ansicht einer beispielhaften Ausgestaltung eines Stapeltischs der Stapeleinrichtung der Batteriezellherstellvorrichtung von Fig. 1; und

Fig. 7    eine schematische Darstellung eines Simulationsablaufs zum Durchführen einer zweistufigen Simulation zum Erhalt einer Bewegungskurve für ein Spannungseinstellelement der positionsgesteuerten Bahnspannungssteuereinheit.

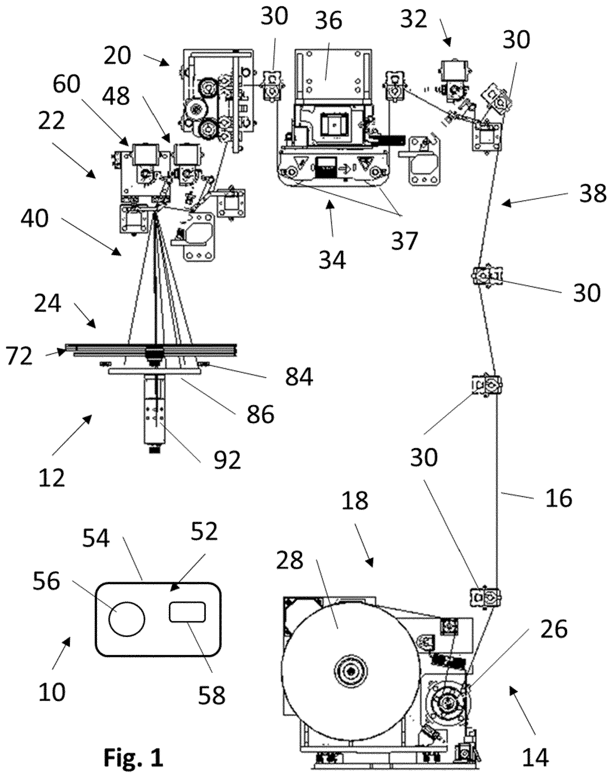

Fig. 1 zeigt eine Übersichtsdarstellung einer bevorzugten Ausführungsform einer Batteriezellherstellvorrichtung 10 zum Herstellen von Batteriestapeln mittels Z-Faltens. Die Batteriezellherstellvorrichtung 10 weist eine Stapeleinrichtung 12 zum wechselweisen Stapeln erster und zweiter Elektroden mit Z-förmig eingefügter Separatorbahn 16 dazwischen und eine Separatorbahnzuführeinrichtung 14 zum Z-förmigen Zuführen einer Separatorbahn 16 zu der Stapeleinrichtung 12 auf.

Die Separatorbahnzuführeinrichtung 14 weist eine Separatorbahnzuliefereinrichtung 18, eine Bahnspannungsübersetzungseinheit 20, eine positionsgesteuerte Bahnspannungssteuereinheit 22 und eine Separatorführungseinheit 24 auf.

Die Separatorbahnzuliefereinrichtung 18 ist zum Zuliefern der Separatorbahn 16 zu der Bahnspannungsübersetzungseinheit 20 ausgebildet.

Bei der dargestellten Ausführungsform weist die Separatorbahnzuliefereinrichtung 18 einen Abwickler 26 auf, der die Separatorbahn 16 von einer Separatorbahnvorratsrolle 28 abwickelt. Der Abwickler 26 wickelt mit einer vorbestimmten, insbesondere konstanten, Bahngeschwindigkeit das benötigte Separatormaterial für den Z-Falt-Prozess ab. Je nach Taktzeitwunsch und des zu verarbeitenden Zellformates variiert diese Geschwindigkeit.

Die Separatorbahn 16 wird beispielsweise über Umlenkeinheiten 30, wie z.B. Umlenkwalzen und eine erste Bahnspannungssteuereinheit, die z.B. als erste Tänzereinheit 32 ausgeführt ist, zu der Bahnspannungsübersetzungseinheit 20 geführt.

Die erste Tänzereinheit 32 stellt bei einigen Ausführungsformen eine konstante (erste) Bahnspannung zwischen Abwickler 26 sowie der Bahnspannungsübersetzungseinheit 20 sicher. Beispielsweise können durch Verwendung eines pneumatisch kontrollierenden Ventils Bahnspannungsschwankungen (verursacht durch diverse Faktoren, wie bspw. Exzentrizitäten des Abwicklers, Fertigungstoleranzen etc.) agil und in kürzester Zeit kompensiert und auf den gewünschten Wert geregelt werden.

Im Bahnverlauf der Separatorbahn 16 ist bei der dargestellten Ausführungsform noch eine Bahnverlaufkorrektureinheit 34 vorgesehen, die dazu eingerichtet ist, einem außermittigen Verlauf der Separatorbahn 16 entgegenzuwirken. Bei der dargestellten Ausführungsform weist diese Bahnverlaufkorrektureinheit 34 einen Drehrahmen 36 auf. Die Bahnverlaufkorrektureinheit 34 ist beispielsweise bezüglich der Bewegungsrichtung der Separatorbahn 16 vor der Bahnspannungsübersetzungseinheit 20 und nach der ersten Tänzereinheit 32 vorgesehen, kann aber auch an anderer Stelle im Bahnverlauf vorgesehen werden.

Die Bahnverlaufkorrektureinheit 34 regelt mittels einer Detektierung der Bahnkante einem außermittigen Verlauf des Separators entgegen. Dies geschieht beispielsweise durch ein leichtes Anstellen von Rollen, beispielsweise eines Rollenpaares 37, gegenüber der Bahn. Bei der dargestellten Ausführungsform ist das Rollenpaar 37 in dem um eine Achse drehbaren Drehrahmen 36 gelagert. Die Anstellung erfolgt beispielsweise über die Ansteuerung eines elektrischen Zylinders.

Die Separatorbahn 16 ist über die Bahnspannungsübersetzungseinheit 20 zu der Separatorführungseinheit 24 geführt. Die Bahnspannungsübersetzungseinheit 20 ist dazu ausgebildet, den Bahnverlauf der Separatorbahn 16 in der Separatorbahnzuführeinrichtung 14 in Abschnitte 38, 40 mit unterschiedlichen Bahnspannungen aufzuteilen. Die Separatorbahn 16 hat in einem in Bewegungsrichtung vor der Bahnspannungsübersetzungseinheit 20 liegenden ersten Abschnitt 38 eine erste Bahnspannung, die durch die erste Bahnspannungssteuereinheit - hier beispielsweise die erste Tänzereinheit 32 - gesteuert wird, insbesondere konstant bzw. homogen gehalten wird. In einem in Bewegungsrichtung nach der Bahnspannungsübersetzungseinheit 20 liegenden zweiten Abschnitt 40 hat die Separatorbahn 16 eine zweite Bahnspannung.

Die Separatorführungseinheit 24 ist zum Durchführen des Z-Faltens hin und her bewegbar. Die positionsgesteuerte Bahnspannungssteuereinheit 22 ist dazu eingerichtet, die zweite Bahnspannung abhängig von der Position der Separatorführungseinheit 24 zu steuern. Mit anderen Worten kann man sagen, dass die positionsgesteuerte Bahnspannungssteuereinheit 22 in Abhängigkeit von der Position der Separatorführungseinheit 24 gesteuert wird, um die zweite Bahnspannung auf einen vorbestimmten Wert zu halten, wobei der vorbestimmte Wert insbesondere im Wesentlichen konstant ist. Man kann also auch sagen, dass die positionsgesteuerte Bahnspannungssteuereinheit 22 dazu dient, die Position der Separatorführungseinheit 24 im Separatorbahnlauf derart auszugleichen, dass die zweite Bahnspannung auf dem vorbestimmten Wert eingestellt wird.

Im Folgenden wird anhand der Darstellung der Fig. 1, 2 und 3 ein Ausführungsbeispiel für die Bahnspannungsübersetzungseinheit 20 näher erläutert. Die Bahnspannungsübersetzungseinheit 20 ermöglicht es, den Bahnverlauf in zwei verschiedene Bahnspannungs-Abschnitte 38, 40 aufzuteilen. Vor dieser Bahnspannungsübersetzungseinheit 20 ist eine höhere Bahnspannung - erste Bahnspannung - aufgrund größerer Abstände der Umlenkwalzen - Umlenkeinheiten 30 - erforderlich. Eine zu niedrige Spannung in der Separatorbahn 16 verursacht ein Durchhängen des Separators und ermöglicht ein einfacheres unerwünschtes Verlaufen der Separatorbahn 16, insbesondere in dem ersten Bahnspannungs-Abschnitt 38. Nach der Bahnspannungsübersetzungseinheit 20 ist eine deutlich geringere Bahnspannung - zweite Bahnspannung - erwünscht, da sich eine solche für den Stapel- und Z-Falt-Prozess als positiver Parameter herauskristallisiert hat und gewisse Vorteile mit sich bringt. Diese Vorteile wurden eingangs schon etwas ausführlicher aufgezählt.

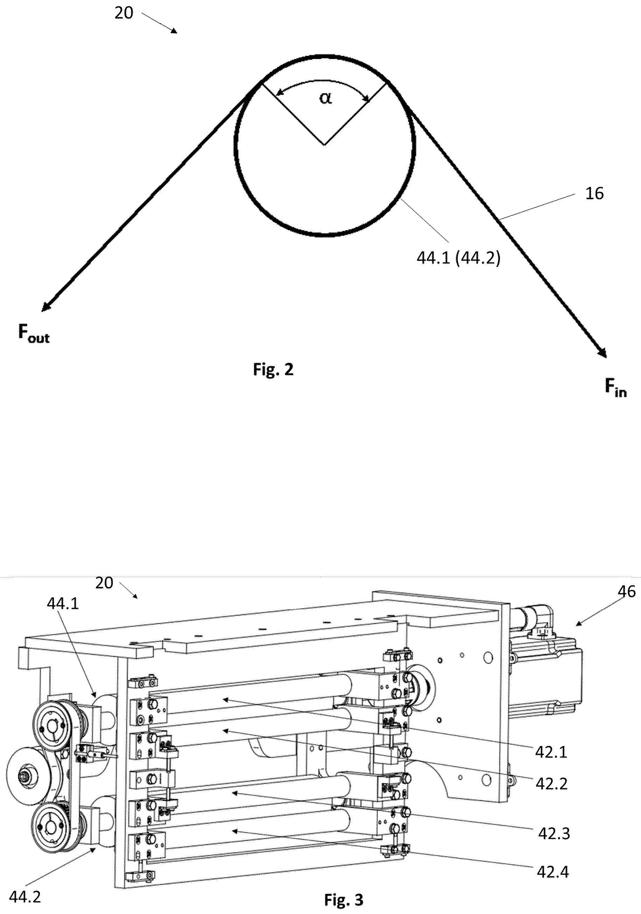

Das physikalische Konzept, auf dem bevorzugte Ausgestaltungen dieser Bahnspannungsübersetzungseinheit 20 basieren, beruht auf der Seilreibung, welche anhand Fig. 2 durch das Euler-Eytelweinsche Seilreibungsgesetz gemäß den folgenden Formeln beschrieben wird:

$$In(F_{in}/F_{out}) = \alpha \times \mu \qquad \qquad \text{für } F_{in} > F_{out}$$

$$F_{out} \times e^{\alpha \times \mu} = F_{in}$$

Wie man den Formeln entnehmen kann, hat ausschließlich der Umschlingungswinkel $\alpha$ der Rollen/Walzen sowie der Reibungskoeffizient $\mu$ zwischen Seil, hier Separator, und Walzenmantelfläche, die insbesondere eine Walzenbeschichtung aufweisen kann, Einfluss auf das Übersetzungsverhältnis $F_{in}$ zu $F_{out}$. Die Überprüfung, ob das gewünschte Übersetzungsverhältnis der beiden unterschiedlichen Bahnspannungen umsetzbar ist, kann durch eine Schlupf-Analyse untersucht werden. Dabei sollten angetriebene Walzen - Antriebswalzen 44.1, 44.2 - der Bahnspannungsübersetzungseinheit 20, welche mit gleicher Bahnlaufgeschwindigkeit wie der Abwickler 26 angetrieben werden, schlupffrei sein, da ein sich einstellender Schlupf für Probleme, wie bspw. erhöhte Bahnspannungsspitzen aufgrund von fehlerhafter Interpolation zwischen der gesteuerten Tänzereinheit und der Separatorführungseinheit 24, sorgen könnte.

In Fig. 3 ist ein beispielhafter Aufbau einer Ausführungsform der Bahnspannungsübersetzungseinheit 20 dargestellt. Die Bahnspannungsübersetzungseinheit 20 gemäß Fig. 3 weist beispielhaft zwei Triebeinheiten 41 auf, die jeweils eine angetriebene Walze bzw. Antriebswalzen 44.1, 44.2 und zwei Umlenkwalzen 42.1, 42.2, 42.3, 42.4 umfassen. Die Antriebswalzen 44.1, 44.2 der Triebeinheiten 41 werden über einen Motor 46 angetrieben. Mit anderen Worten kann man sagen, dass die in Fig. 3 gezeigte Ausführungsform der Bahnspannungsübersetzungseinheit 20 eine erste bis vierte Umlenkwalze 42.1-42.4, mehreren Antriebswalzen 44.1, 44.2 und einen Motor 46 aufweist. Der Motor 46 sitzt an der Rückseite bzw. auf einer Seite in Längsrichtung der Walzen gesehen, und die zwei, hier miteinander gekoppelten Antriebswalzen 44.1, 44.2 an. Die hier vier Umlenkwalzen 42.1-42.4 sorgen für die Separatorführung und die nötige Umschlingung, wobei je Triebeinheit 41 zwei Umlenkwalzen 42.1-42.2 bzw. 42.3-42.4 je einer Antriebswalze 44.1 bzw. 44.2 zugeordnet sind. Über die Position der zwei Umlenkwalzen 42.1-42.2; 42.3-42.4 relativ zu der jeweiligen Antriebswalze 44.1; 44.2 kann der Umschlingungswinkel $\alpha$, mit dem der Separator um die jeweilige Antriebswalze 44.1, 44.2 geschlungen ist, eingestellt werden. Je nach Umschlingungswinkel, dem Reibwert und einzustellenden Übersetzungsverhältnis kann diese Bahnspannungsübersetzungseinheit 20 auch mit einer weiteren (dritten) Triebeinheit 41, aufweisend eine Antriebswalze und entsprechend zwei Umlenkwalzen, erweitert werden.

Bei der in Fig. 1 dargestellten Separatorbahnzuführeinrichtung 14 weist die in dem zweiten Abschnitt vorgesehene positionsgesteuerte Bahnspannungssteuereinheit 22 optional eine Feinstkompensationseinheit 48 auf. Bei dem Ausführungsbeispiel ist die Feinstkompensationseinheit 48 im Bahnverlauf des Separators zwischen der Bahnspannungsübersetzungseinheit 20 und einem positionsgesteuerten Spannungseinstellelement 50 der positionsgesteuerten Bahnspannungssteuereinheit 22 vorgesehen. Die Feinstkompensationseinheit 48 ist beispielsweise als weitere Tänzereinheit ausgebildet und soll auftretende Bahnschwankungen, welche durch das nachfolgende positionsgesteuerte Spannungseinstellelement 50 nicht kompensiert wurden, heraus tilgen. Im idealen Fall, welche die Simulation widerspiegelt, sollte diese Feinstkompensationseinheit 48 komplett feststehen. Durch Abweichungen zwischen Simulation und Realität wird diese jedoch Schwankungen abbekommen und kleinste Bewegungen vollziehen.

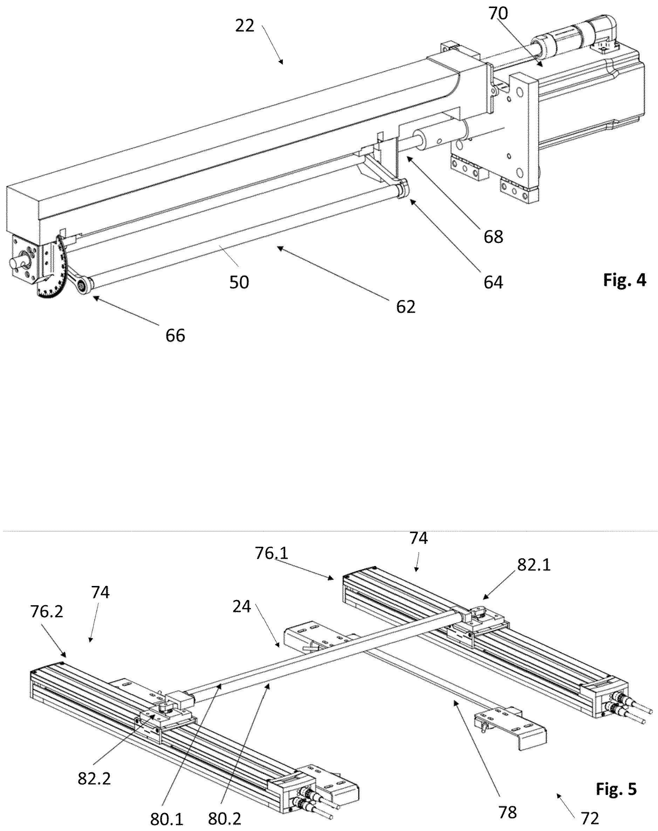

Wie in den Fig. 1 und 4 dargestellt weist die positionsgesteuerte Bahnspannungssteuereinheit 22 wenigstens ein Spannungseinstellelement 50 auf, welches an der Separatorbahn 16 derart angreift, dass es deren Bahnspannung beeinflussen und einstellen kann. Bei einigen nicht dargestellten Ausführungsformen kann das Spannungseinstellelement 50 mechanisch mit der Bewegung der Separatorführungseinheit 24 gekoppelt sein, beispielsweise über eine Steuerscheibe. Dabei kann die Form der Steuerscheibe zuvor durch Simulationsvorgänge ähnlich der im Folgenden wiedergegebenen Art ermittelt werden, um eine geeignete Relation der Bewegung oder Einstellung des Spannungseinstellelements 50 abhängig von der Bewegung der Separatorführungseinheit 24 zu ermitteln. Bei bevorzugten Ausführungsformen weist die positionsgesteuerte Bahnspannungssteuereinheit 22 eine Rechnereinheit 52 auf, in deren Speicher eine vorbestimmte Beziehung zwischen Position der Separatorführungseinheit 24 und der Bewegung oder Stellung des Spannungseinstellelements 50 gespeichert ist. Die Rechnereinheit 52 kann separat ausgeführt sein. Bei der dargestellten Ausführungsform ist die Rechnereinheit 52 als Teil einer Steuerung 54 der Separatorbahnzuführeinrichtung 14 oder der gesamten Batteriezellherstellvorrichtung 10 ausgebildet, beispielsweise als Teil eines Computerprogramms (Steuerungssoftware). Die Steuerung 54 weist einen Prozessor 56 und einen Speicher 58 auf. Die Steuerung 54 ist mit den Aktoren, Achsen, Bewegungsmechanismen und Bewegungseinheiten sowie Sensoren der Batteriezellherstelleinrichtung 10 in Wirkverbindung und steuert den Batteriezellherstellprozess sowie ein Verfahren zum Zuführen des Separators, welches weiter unten noch näher erläutert wird.

Bei bevorzugten Ausgestaltungen ist die vorbestimmte Beziehung oder Kurve zwischen Bewegung der Separatorführungseinheit 24 und Bewegung des Spannungseinstellelements 50 derart, dass die durch die Bewegung der Separatorführungseinheit 24 in den Bahnverlauf eingebrachte Dynamik so weit wie möglich ausgeglichen wird, d.h. die zweite Bahnspannung möglichst konstant ist. Bei einigen Ausführungsformen kann es aber auch vorteilhaft sein, bei bestimmten Phasen Anpassungen in der zweiten Bahnspannung vorzunehmen. Bei solchen Ausführungsformen kann in der Rechnereinheit 52 eine vorbestimmte Beziehung zwischen Position der Separatorführungseinheit 24 und Wert der zweiten Bahnspannung hinterlegt sein.

Bei der dargestellten Ausführungsform weist die positionsgesteuerte Bahnspannungssteuerungseinheit 22 eine positionsgesteuerte Tänzereinheit 60 auf. Diese kann unterschiedlich ausgebildet sein. Eine bevorzugte Ausgestaltung ist in Fig. 4 wiedergegeben. Als Spannungseinstellelement 50 ist beispielsweise eine Umlenkwalze 62 vorgesehen. Bei einigen nicht dargestellten Ausführungsformen kann die Umlenkwalze 62 linear bewegt werden, um den Bahnverlauf der Separatorbahn 16 zu vergrößern oder zu verkleinern und so die zweite Bahnspannung zu steuern. Bei der in Fig. 4 dargestellten Ausführungsform ist die Umlenkwalze 62 an einem Ausleger 64 und/oder Lagerschild 66 mit radialem Abstand zu einer Welle 68 gelagert. Weiter ist ein durch die Rechnereinheit 52 positionsgesteuerter Motor 70 zum Verdrehen der Welle 68 und damit zum Schwenken des Auslegers 64 und des Lagerschilds 66 vorgesehen.

In Fig. 4 ist der Aufbau der positionsgesteuerten Tänzereinheit 60 mit dem positionsgesteuerten Motor 70, Umlenkwalze 62 und den Lagerschildern 66 zu sehen. Hierbei ist vor allem der Leichtbau der Tänzereinheit 60 zu nennen.

Bei der dargestellten Ausführung von Fig. 1 ist die positionsgesteuerte Tänzereinheit 60 für besonders vorteilhafte Einstellung der zweiten Bahnspannung vorgesehen. Agierend auf die darunter folgende Separatorführungseinheit 24 gleicht der Tänzer der positionsgesteuerten Tänzereinheit 60 die entstehende Dynamik aufgrund des Z-Falt-Prozesses aus. Da der Abwickler 26 mit konstanter Bahngeschwindigkeit Separator in das System hineinfördert und beim Stapelprozess zu jeder Zeit unterschiedliche Menge an Separator benötigt wird - stark auch abhängig vom Verfahrprofil (Zellformat) sowie Taktzeit der Separatorführungseinheit - wird zur Auslegung der Batteriezellherstellvorrichtung 10 die ideale Positionskurve mittels Simulation ermittelt. Insbesondere ist vorgesehen, dass diese ideale Positionskurve nicht nur die Dynamik aufnimmt, sondern auch die gewünschte Bahnspannung durch sein Verfahrprofil einstellt.

Aufgrund der kurzen Reaktionszeiten wird hierbei bei einigen Ausführungsformen eine Vorsteuerung vorgenommen. Eine (Kraft-)Regelung ist hierbei nicht zielführend, da eine Auswertung der Bahnspannung und das Verarbeiten und Steuern einer Regelgröße zu viel Zeit in Anspruch nimmt.

Im Folgenden werden anhand der Darstellung in den Fig. 1 und 5 vorteilhafte Ausgestaltungen der Separatorführungseinheit 24 näher erläutert. Fig. 5 zeigt ein Ausführungsbeispiel für eine Separatorführungseinrichtung 72, die die hin- und her bewegbare Separatorführungseinheit 24 und einen Bewegungsmechanismus 74 zum durch die Steuerung 54 gesteuerten Bewegen der Separatorführungseinheit 24 aufweist. Der Bewegungsmechanismus 74 weist eine erste Bewegungseinheit 76.1 mit einer ersten Achse (im Sinne von Aktor) zum Bewegen eines an einem ersten Randbereich der Separatorbahn 16 angreifenden ersten Bereichs der Separatorführungseinheit 24 und eine zweite Bewegungseinheit 76.2 mit einer zweiten Achse (im Sinne von Aktor) zum Bewegen eines an einem zweiten Randbereich der Separatorbahn 16 angreifenden zweiten Bereichs der Separatorführungseinheit 24 auf.

Die Separatorführungseinheit 24 weist zum Beispiel eine erste und eine zweite Führungswalze 80.1, 80.2 zum Führen der Separatorbahn 24 dazwischen auf. Die Enden der Führungswalzen 80.1, 80.2 sind jeweils an Drehgelenken 82.1, 82.2 gelagert, welche durch die beispielsweise mit Linearmotoren ausgerüsteten Achsen - Bewegungseinheiten 76.1, 76.2 - quer zu den Drehachsen der Führungswalzen 80.1, 80.2 bewegbar sind. Bei einigen Ausführungsformen ist der Bewegungsmechanismus 74 zum gesteuerten gemeinsamen Verfahren der ersten und zweiten Führungswalze 80.1, 80.2 in Richtung quer zu deren Mittelachsen ausgebildet. Der Bewegungsmechanismus 74 ist insbesondere dazu ausgebildet, die erste und die zweite Bewegungseinheit 76.1, 76.2 synchron oder relativ zueinander voreilend oder nacheilend zu verfahren.

Weiter ist in Fig. 5 ein FinalCheck-Sensor 78 dargestellt, mit der der Bahnverlauf der Separatorbahn 16 beim Z-Falten final überprüft werden kann.

Bei einigen Ausführungsformen der Separatorführungseinheit 24 treibt eine autarke NC gesteuerte Achse - Bewegungsmechanismus 74 - den Separator von links nach rechts bzw. rechts nach links (bezogen auf die Darstellung in Fig. 1). Diese Achse ist für die eigentliche Z-Falt-Bewegung und Umschlag um Niederhaltefinger 84 der Stapeleinrichtung 12 verantwortlich. Angeordnet ist die Separatorführungseinheit 24 knapp über der Stapeloberkante, die wiederum durch ein Absenken eines Stapeltisches 86 der Stapeleinrichtung 12 an gleicher Position verweilt. Somit kann ein sich ständig zyklisch wiederholendes Verfahrprofil über den kompletten Stapelprozess aufgeprägt werden.

Durch die Entkoppelung der Führung des Separators zu den Stapelachsen der Elektroden, kann diese Achse - Bewegungsmechanismus 74 - beliebige Profile abfahren. Hierbei ist es vorteilhaft, wenn speziell beim Umschlag um den Niederhaltefinger 84 ein kurzer Stopp eingelegt wird, da entsprechende Simulationen an diesem Punkt zu erwartende Bahnspannungssprünge aufgezeigt haben.

In Fig. 5 ist ein expliziterer beispielhafter Aufbau der Separatorführungseinrichtung 72 mit der Separatorführungseinheit 24 und ihrer Komponenten ersichtlich. Der ersten Achse - erste Bewegungseinheit 76.1 - sowie der zweiten Achse - zweite Bewegungseinheit 76.2 - werden ein Verfahrprofil vorgegeben, wobei diese durch das Drehgelenk 82.1, 82.2 auch gegenseitig voreilend bzw. hinterhereilend sein können. Somit kann einem Verlauf der Separatorbahn 16 entgegengesteuert werden, indem hierfür der FinalCheck- Sensor 78 eingebunden wird und eine gewollte Schiefstellung der Achsen erzeugt wird. Zwischen den zwei, auf den beiden Achsen angebrachten Führungswalzen 80.1, 80.2 wird der Separator geführt.

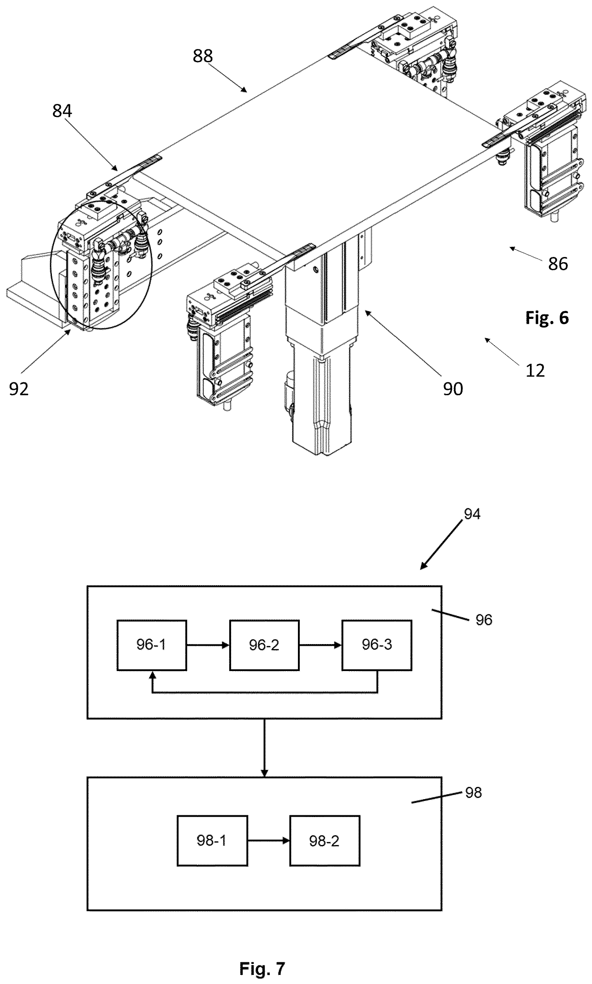

Im Folgenden wird anhand der Darstellung der Fig. 1 und 6 ein beispielhafter Aufbau der Stapeleinrichtung 12 näher erläutert. Die Stapeleinrichtung 12 weist den Stapeltisch 86 mit einer Stapeltischplatte 88 sowie einen ersten bis vierten Niederhaltefinger 84 auf. Die Stapeltischplatte 88 ist mittels einer Absenk-Achse 90 - Bewegungsmechanismus zum Heben und insbesondere Absenken der Stapeltischplatte 88 - bewegbar, insbesondere um das aktuelle Stapeln immer in der gleichen Höhe durchzuführen. Die Niederhaltefinger 84 sind mit zugeordneten Niederhalteachsen 92 (Bewegungsmechanismus für die Niederhaltefinger) auf und ab sowie vor und zurück bewegbar.

Demnach weist die Stapeleinrichtung 12 in einigen Ausführungsformen einen absenkbaren Stapeltisch 86 auf. Durch das Absenken des Stapeltisches 86 ist es möglich immer die gleiche Ablagehöhe der Elektrode und folglich des Separators zu realisieren. Somit hat die Separatorführungseinheit 24 relativ zum Stapeltisch 86 und zu den Niederhaltefingern 84 immer das gleiche Verfahrprofil. Aufgrund dessen kann ein ständig sich gleichbleibender Zyklus aufgespielt werden.

In Fig. 6 ist der beispielhafte Aufbau und Umsetzung mit einem in der Höhe absenkbaren Stapeltisch 86 zu erkennen, welcher das Ablegen auf immer derselben Ablagehöhe ermöglicht und somit einen konstanten Wert zwischen Separatorführungseinheit 24 und Stapeltischplatte 88 einstellt.

Um eine optimale Beziehung zwischen Bewegung der Separatorführungseinheit 24 und abhängig davon Bewegung des Spannungseinstellelements 50 der positionsgesteuerten Bahnspannungssteuereinheit 22 zu ermitteln, empfiehlt sich eine Simulation, in der die Funktion der zu errichtenden oder einzurichtenden Separatorbahnzuführeinrichtung 14 simuliert wird.

Im Folgenden wird anhand der Fig. 7 auf einen beispielhaften Simulationsablaufs 94 eingegangen, wobei Fig. 7 eine schematische Darstellung eines solchen Simulationsablaufs 64 zeigt. Bei einer solchen Simulation ist insbesondere die Ermittlung der optimalen Kurve für die positionsgesteuerte Bahnspannungssteuereinheit 22 von Interesse. Insbesondere ist die Ermittlung des vorgesteuerten Bewegungsprofils der positionsgesteuerten Tänzereinheit 60 hierfür von Bedeutung.

In einer ersten Stufe 96 der Simulation wird zunächst eine Bewegung einer zur Steuerung der zweiten Bahnspannung eingesetzten Tänzereinheit 60a bei einer Kraftregelung simuliert (96-1). Hierbei wird die Separatorführungseinheit 24 wird mit einem gewissen Bewegungsprofil beaufschlagt. Man kann auch sagen, dass für die Separatorführungseinheit 24 eine Position vorgegeben wird, 96-2. Am Ende des Bahnlaufes sitzt eine Auswerteeinheit, welche die Bahnspannung detektiert und mit dem vorgegebenen Sollwert vergleicht, 96-3. Über einen PID-Regelkreis 96-4 wird diese Information rückgeführt und es wird eine über die Zeit veränderliche Kraft auf die (hier kraftgesteuerte) Tänzereinheit 60a aufgeprägt. Dadurch stellt sich die gewünschte Bahnspannung ein. Eine Auswerteeinheit im Drehpunkt der Tänzereinheit 60a zeichnet hierbei den Verlauf der Rotationsposition über die Zeit mit, welche sich durch das ideal vorgegebene Kraftprofil der PID-Regelung ergibt. Folglich ist die Winkelposition, also die Rotationsposition, über die Zeit das Resultat der Kraftsteuerung über die Zeit. Mit anderen Worten kann man sagen, dass die Winkelposition über die Zeit als Basis für die optimale Kurve für die positionsgesteuerte Bahnspannungssteuereinheit 22 dient.

Diese als ideal ermittelte Positionskurve wird schließlich in einer zweiten Schwestersimulation 98 direkt dem Tänzer aufgespielt. Hierbei ändert sich im speziellen bei der Simulation der Austausch des kraftgesteuerten Tänzers 60a gegen eine positionsgesteuerte Tänzereinheit 60. Über eine Tabelle wird die ideale Kurve eingelesen, 98-1, und dieser Tänzereinheit 60 aufgeprägt, 98-2. Die PID-Regelung wird somit überflüssig und fällt in dieser Form der Simulation heraus.

Die komplette Simulation beruht lediglich auf einer offline durchgeführten Ermittlung von Regelparametern. Eine Regelung innerhalb der Maschine ist aufgrund der Verarbeitungszeit von Ist-Wert, Rückführung über PLC, Auswertung und Regeln der Stellgröße bei den erwünschten Taktzeiten zeitlich nicht umsetzbar. Die Dauer der Verarbeitung erzeugt eine zu große Zeitverzögerung, sodass die Stellgröße bis letztliche Rückführung bereits wieder neu ermittelt werden müsste. Somit wird man einen ständigen Offset haben, welcher nicht zu der gewünschten Bahnspannung führt. Aufgrund dessen wird eine vordefinierte Positionskurve ermittelt und in der Realität aufgespielt.

Zur Verifizierung und Überprüfung, wird diese somit lediglich im Simulationsprogramm eingespielt und das Ergebnis rein simulativ überprüft.

Für eine Umsetzung in der Maschine wird hierbei steuerungstechnisch die Position der Tänzereinheit 60 nicht in Abhängigkeit der Zeit, sondern zur Position der Separatorführungseinheit 24 ausgegeben. Somit fungiert die Position der Separatorführungseinheit 24 als Master-Achse für die positionsgesteuerten Tänzereinheit 60.

Die Separatorführungseinheit 24 hat hierbei wiederum einen weiteren Master, die sogenannte Stapel-Achse. Diese Achse besitzt die (nicht dargestellten) Greifer, die wiederum das Elektrodenmaterial greifen, ausrichten und auf dem Stapeltisch schließlich ablegen. Mögliche Greiferausbildungen sind dem Fachmann aus den eingangs erwähnten Literaturstellen bekannt.

Eine ideale Kombination dieser Achsbewegungen führt schließlich zu einer qualitativ und in kürzester Zeit fertig gestapelten Batteriezelle.

Im bestimmungsgemäßen Gebrauch der Batteriezellherstellvorrichtung 10 lässt sich ein entsprechendes Batteriezellherstellverfahren zum Herstellen von Batteriezellen durch Z-Falten durchführen, wobei ein Separator als Separatorbahn 16 zugeführt wird.

Es ist erwünscht, beim Z-Falten den Separator in sehr kurzer Taktzeit umzuschlagen. Für das Einschlagen der Elektroden mit dem Separator wird der Separator vorteilhaft quer über die Elektrode verfahren, anschließend bleibt er stehen und fährt dann in die Gegenrichtung zurück. Für den Umschlag ist auch erwünscht, dass der Separator bei der Überfahrt über die Elektrode mittels der Separatorführungseinheit 24 zuerst abspulen und dann schlagartig am Scheitelpunkt wieder zurückgefördert wird.

Zur Zuführung der Separatorbahn 16 werden daher vorteilhaft folgende Schritte durchgeführt:

a) Zuführen der Separatorbahn 16 mit einer ersten Bahnspannung zu der Bahnspannungsübersetzungseinheit 20, die einen Bahnverlauf der Separatorbahn 16 in Abschnitte 38, 40 mit unterschiedlichen Bahnspannungen aufteilt;
b) Führen der Separatorbahn 16 von der Bahnspannungsübersetzungseinheit 20 mit einer zweiten Bahnspannung zu der Separatorführungseinheit 24;
c) Z-förmiges Zuführen der Separatorbahn 16 mittels Hin- und Herbewegung der Separatorführungseinheit 24 zum Stapeln der Batteriezelle; und
d) Steuern der zweiten Bahnspannung abhängig von der Position der Separatorführungseinheit 24.

Mit der Bahnspannungsübersetzungseinheit 20 wird vorteilhaft eine bahnabwärts vordefinierte, deutlich geringere Bahnspannung eingestellt. Bei einigen Ausführungsformen wird abhängig von Anlagen bzw. Zellparametern und der sich damit verbundenen Achsdynamik der Separatorführungseinheit 24, beispielsweise mittels MapleSim, vorab der ideale Positionsverlauf (Winkelposition) der positionsgesteuerten Tänzereinheit ermittelt. Dies ist vorstehend anhand der konkreten Ausführungsbeispiele erläutert worden; es ist dem Fachmann klar, dass bei anderer Ausführung der positionsgesteuerten Bahnsteuereinheit 22 entsprechende Anpassungen in der Simulation vorzunehmen sind.

Um die Zuführung eines Separators zu eine Z-Faltprozess bei der Batteriezellherstellung hinsichtlich Qualität und Taktzeit zu verbessern wird der Separator mit folgenden Schritten zugeführt:

a) Zuführen einer Separatorbahn (16) mit einer ersten Bahnspannung zu einer Bahnspannungsübersetzungseinheit (20), die einen Bahnverlauf der Separatorbahn in Abschnitte (38, 40) mit unterschiedlichen Bahnspannungen aufteilt;
b) Führen der Separatorbahn (16) von der Bahnspannungsübersetzungseinheit (20) mit einer zweiten Bahnspannung zu einer Separatorführungseinheit (24);
c) Z-förmiges Zuführen der Separatorbahn (16) mittels Hin- und Herbewegung der Separatorführungseinheit (24) zum Stapeln der Batteriezelle; und
d) Steuern der zweiten Bahnspannung abhängig von der Position der Separatorführungseinheit (24).

Außerdem werden Einrichtungen (14), Vorrichtungen (10), Steuerungen (54) und Computerprogramme zum Durchführen des Zuführens vorgeschlagen.

**Bezugszeichenliste:**

10      Batteriezellherstellvorrichtung
12      Stapeleinrichtung
14      Separatorbahnzuführeinrichtung
16      Separatorbahn

18    Separatorbahnzuliefereinrichtung
20    Bahnspannungsübersetzungseinheit
22    positionsgesteuerte Bahnspannungssteuereinheit
24    Separatorführungseinheit
26    Abwickler
28    Separatorbahnvorratsrolle
30    Umlenkeinheit
32    erste Tänzereinheit
34    Bahnverlaufkorrektureinheit
36    Drehrahmen
37    Rollenpaar
38    erster Abschnitt des Bahnverlaufs
40    zweiter Abschnitt des Bahnverlaufs
41    Triebeinheit
42.1   erste Umlenkwalze
42.2   zweite Umlenkwalze
42.3   dritte Umlenkwalze
42.4   vierte Umlenkwalze
44.1   erste Antriebswalze
44.2   zweite Antriebswalze
46    Motor
48    Feinstkompensationseinheit
50    Spannungseinstellelement
52    Rechnereinheit
54    Steuerung
56    Prozessor
58    Speicher
60    positionsgesteuerte Tänzereinheit
60a   kraftgesteuerte Tänzereinheit (in erster Simulationsstufe)
62    Umlenkwalze (Beispiel für positionsgesteuertes Spannungseinstellelement)
64    Ausleger
66    Lagerschild
68    Welle
70    Motor
72    Separatorführungseinrichtung
74    Bewegungsmechanismus
76.1   erste Bewegungseinheit
76.2   zweite Bewegungseinheit
78    FinalCheck-Sensor
80.1   erste Führungswalze
80.2   zweite Führungswalze
82.1   erstes Drehgelenk
82.2   zweites Drehgelenk
84    Niederhaltefinger
86    Stapeltisch
88    Stapeltischplatte
90    Absenk-Achse
92    Niederhalteachse
94    Simulation
96    erste Stufe der Simulation
98    zweite Stufe der Simulation

**Patentansprüche**

1.  Separatorbahnzuführeinrichtung (14) für eine Batteriezellherstellvorrichtung (10) zum Herstellen von Batteriezellen mittels Z-Faltens, wobei die Separatorbahnzuführeinrichtung (14) zum Z-förmigen Zuführen einer Separatorbahn (16) zu einer Stapeleinrichtung (12) der Batteriezellherstellvorrichtung (10) ausgebildet ist und

eine Separatorbahnzuliefereinrichtung (18), eine Bahnspannungsübersetzungseinheit (20), eine positionsgesteuerte Bahnspannungssteuereinheit (22) und eine Separatorführungseinheit (24) aufweist,

wobei die Separatorbahnzuliefereinrichtung (18) zum Zuliefern der Separatorbahn (16) zu der Bahnspannungsübersetzungseinheit (20) ausgebildet ist,

wobei die Separatorbahn (16) über die Bahnspannungsübersetzungseinheit (20) zu der Separatorführungseinheit (24) geführt ist,

wobei die Bahnspannungsübersetzungseinheit (20) dazu ausgebildet ist, den Bahnverlauf der Separatorbahn (16) in der Separatorbahnzuführeinrichtung (14) in Abschnitte (38, 40) mit unterschiedlichen Bahnspannungen derart aufzuteilen, dass die Separatorbahn (16) in einem in Bewegungsrichtung vor der Bahnspannungsübersetzungseinheit (20) liegenden ersten Abschnitt (38) eine erste Bahnspannung hat und in einem in Bewegungsrichtung nach der Bahnspannungsübersetzungseinheit (20) liegenden zweiten Abschnitt (40) eine zweite Bahnspannung hat,

wobei die Separatorführungseinheit (24) zum Durchführen des Z-Faltens hin und her bewegbar ist, und wobei die positionsgesteuerte Bahnspannungssteuereinheit (22) dazu eingerichtet ist, die zweite Bahnspannung abhängig von der Position der Separatorführungseinheit (24) zu steuern.

2. Separatorbahnzuführeinrichtung (14) nach Anspruch 1, **gekennzeichnet durch** wenigstens eine oder mehrere der folgenden Einheiten:

2.1 eine erste Tänzereinheit (32) zum Einstellen und/oder Regeln der ersten Bahnspannung auf einen konstanten vorbestimmten Wert;

2.2 eine Bahnverlaufkorrektoreinheit (34), die dazu eingerichtet ist, einem außermittigen Verlauf der Separatorbahn (16) entgegenzuwirken.

3. Separatorbahnzuführeinrichtung (14) nach einem der voranstehenden Ansprüche, **dadurch gekennzeichnet, dass**

3.1 die bezüglich der Bewegungsrichtung der Separatorbahn (16) vor der Bahnspannungsübersetzungseinheit (20) vorliegende erste Bahnspannung größer als die bezüglich der Bewegungsrichtung nach der Bahnspannungsübersetzungseinheit vorliegende zweite Bahnspannung ist; und/oder

3.2 die Bahnspannungsübersetzungseinheit (20) wenigstens eine Triebeinheit (41) aufweist, wobei die Triebeinheit (41) eine angetriebene Walze (44.1, 44.2) und zwei nicht-angetriebene Umlenkwalzen (42.1-42.4) aufweist.

4. Separatorzuführeinrichtung (14) nach Anspruch 3, **dadurch gekennzeichnet, dass**

4.1 die angetriebene Walze (44.1, 44.2) und die zwei Umlenkwalzen (41.2-42.4) einer Triebeinheit (41) bezüglich der Bewegungsrichtung der Separatorbahn (16) alternierend angeordnet sind, und/oder

4.2 die zwei Umlenkwalzen (42.1-42.4) relativ zur angetriebenen Walze (44.1, 44.2) versetzt (außermittig) angeordnet sind.

5. Separatorzuführeinrichtung (14) nach Anspruch 3 oder 4, **dadurch gekennzeichnet, dass** die Bahnspannungsübersetzungseinheit (20) die Bahnspannung gemäß nachfolgender Formel beeinflusst:

$$\frac{F_{in}}{F_{out}} < e^{n*\mu*\alpha} \qquad (1),$$

mit

$F_{in}$ = Kraft, aus der die erste Bahnspannung resultiert;
$F_{out}$ = Kraft, aus der die zweite Bahnspannung resultiert;
n = Anzahl der Triebeinheiten;
$\mu$ = Reibwert zwischen angetriebener Walze und Separatorbahn; und
$\alpha$ = Umschlingungswinkel der Separatorbahn um die angetriebene Walze.

6. Separatorbahnzuführeinrichtung (14) nach einem der voranstehenden Ansprüche, **dadurch gekennzeichnet, dass** die positionsgesteuerte Bahnspannungssteuereinheit (22):

6.1 eine positionsgesteuerte Tänzereinheit (60) zum Steuern der zweiten Bahnspannung abhängig von der Position der Separatorführungseinheit (24) aufweist, und/oder

6.2 eine Feinstkompensationseinheit (48) zum Kompensieren von bei dem Steuern der zweiten Bahnspannung auftretenden Bahnspannungsschwankungen aufweist, und/oder

6.3 eine Rechnereinheit (52) mit einem Speicher (58) aufweist, in dem eine vorbestimmte Beziehung zwischen Position der Separatorführungseinheit (24) und a) dem Wert der zweiten Bahnspannung und/oder b) einer Stellung eines Spannungseinstellelements (50) gespeichert ist; und/oder

6.4 zum Vorsteuern der zweiten Bahnspannung ausgebildet ist; und/oder

6.5 eine Umlenkwalze (62), die an einem Ausleger (64) oder Lagerschild (66) mit radialem Abstand zu einer Welle (68) gelagert ist, und einen positionsgesteuerten Motor (70) zum Verdrehen der Welle (66) und zum Schwenken des Auslegers (64) oder des Lagerschilds (66) aufweist.

7. Separatorbahnzuführeinrichtung (14) nach einem der voranstehenden Ansprüche, **dadurch gekennzeichnet, dass** eine Separatorführungseinrichtung (72) vorgesehen ist, die die Separatorführungseinheit (24) und einen Bewegungsmechanismus (74) zum gesteuerten Verfahren der Separatorführungseinheit (24) aufweist, und

7.1 dass die Separatorführungseinheit (24) eine erste und eine zweite Führungswalze (80.1, 80.2) zum Führen der Separatorbahn (16) dazwischen aufweist und der Bewegungsmechanismus (74) zum gesteuerten gemeinsamen Verfahren der ersten und zweiten Führungswalze (80.1, 80.2) in Richtung quer zu deren Mittelachsen ausgebildet ist und/oder

7.2 dass der Bewegungsmechanismus (74) eine erste Bewegungseinheit (76.1) zum Bewegen eines an einem ersten Randbereich der Separatorbahn (16) angreifenden ersten Bereichs der Separatorführungseinheit (24) und eine zweite Bewegungseinheit (76.2) zum Bewegen eines an einem zweiten Randbereich der Separatorbahn (16) angreifenden zweiten Bereichs der Separatorführungseinheit (24) aufweist und dazu ausgebildet ist, die erste und die zweite Bewegungseinheit (76.1, 76.2) synchron oder relativ zueinander voreilend oder nacheilend zu verfahren.

8. Batteriezellherstellvorrichtung (10) zum Herstellen von Batteriestapeln mittels Z-Falten, umfassend eine Separatorbahnzuführeinrichtung (14) nach einem der voranstehenden Ansprüche und eine Stapeleinrichtung (12) zum wechselweisen Stapeln erster und zweiter Elektroden mit Z-förmig eingefügter Separatorbahn (16) dazwischen.

9. Separatorbahnzuführverfahren zum Z-förmigen Zuführen einer Separatorbahn (16) zu einem Z-Faltungsprozess beim Herstellen einer Batteriezelle mittels Z-Faltens, umfassend

a) Zuführen einer Separatorbahn (16) mit einer ersten Bahnspannung zu einer Bahnspannungsübersetzungseinheit (20), die einen Bahnverlauf der Separatorbahn in Abschnitte (38, 40) mit unterschiedlichen Bahnspannungen aufteilt;

b) Führen der Separatorbahn (16) von der Bahnspannungsübersetzungseinheit (20) mit einer zweiten Bahnspannung zu einer Separatorführungseinheit (24);

c) Z-förmiges Zuführen der Separatorbahn (16) mittels Hin- und Herbewegung der Separatorführungseinheit (24) zum Stapeln der Batteriezelle; und

d) Steuern der zweiten Bahnspannung abhängig von der Position der Separatorführungseinheit (24).

10. Separatorbahnzuführverfahren nach Anspruch 9, **dadurch gekennzeichnet, dass** Schritt a) wenigstens einen oder mehrere der Schritte umfasst:

a1) Abwickeln der Separatorbahn (16) von einer Vorratsrolle (28) mit vorbestimmter oder konstanter oder variierender Bahngeschwindigkeit;

a2) Steuern oder Regeln der ersten Bahnspannung auf einen vorbestimmten Wert;

a3) Einstellen der ersten Bahnspannung auf einen Wert, der höher als die zweite Bahnspannung ist;

a4) Einstellen der ersten Bahnspannung mittels einer ersten Tänzereinheit (32);

a5) Einstellen oder Korrektur der Position der zuzuführenden Separatorbahn (16) quer zu ihrer Bewegungsrichtung;

a6) Detektion der Position einer Kante der Separatorbahn (16), Korrektur der Position der zuzuführenden Separatorbahn (16) abhängig von der detektierten Position mittels Winkeleinstellung einer oder mehrerer Führungsrollen, über die die Separatorbahn (16) zugeführt wird.

11. Separatorbahnzuführverfahren nach einem der Ansprüche 9 oder 10, **dadurch gekennzeichnet, dass** Schritt b) wenigstens einen oder mehrere der Schritte umfasst:

b1) Einstellen eines Verhältnisses zwischen erster und zweiter Bahnspannung mittels Reibung an wenigstens einer Triebeinheit (41) der Bahnspannungsübersetzungseinheit (22) und mittels Einstellens des Umschlingungswinkels ($\alpha$) der Separatorbahn (16) um die angetriebene Walze (44.1, 44.2) der wenigstens einen Triebeinheit;
b2) schlupffreies Antreiben der angetriebenen Walze (44.1, 44.2) der wenigstens einen Triebeinheit (41) der Bahnspannungsübersetzungseinheit (22);
b3) Führen der Separatorbahn (16) nacheinander um/durch mehrere Triebeinheiten (41) .

12. Separatorbahnzuführverfahren nach einem der Ansprüche 9 bis 11, **dadurch gekennzeichnet, dass** Schritt c) wenigstens einen oder mehrere der Schritte umfasst:

c1) Führen der Separatorbahn (16) zwischen einem Paar gemeinsam hin- und her bewegbarer Führungswalzen (80.1, 80.2);
c2) Bewegen der Separatorführungseinheit (24) entsprechend eines vorgegebenen Bewegungsmusters;
c3) Zuführen der Separatorbahn (16) immer auf der gleichen Höhe zu einem Batteriezellstapel, wobei der Batteriezellstapel entsprechend vertikal nachgeführt wird;
c4) Bewegen eines an einem ersten Randbereich der Separatorbahn (16) angreifenden ersten Bereichs der Separatorführungseinheit (24) und Bewegen eines an einem zweiten Randbereich der Separatorbahn (16) angreifenden zweiten Bereichs der Separatorführungseinheit (24) derart, dass der erste und zweite Bereich synchron oder relativ zueinander voreilend oder nacheilend verfahren werden.

13. Separatorbahnzuführverfahren nach einem der Ansprüche 9 bis 12, **dadurch gekennzeichnet, dass** Schritt d) wenigstens einen oder mehrere der Schritte umfasst:

d1) Bestimmen einer Beziehung oder Kurve zwischen Position der Separatorführungseinheit (24) und dem Wert der zweiten Bahnspannung mittels Simulation;
d2) Bestimmen einer Beziehung oder Kurve zwischen Position der Separatorführungseinheit (24) und Position oder Stellung eines Spannungseinstellelements (50) mittels Simulation;
d3) Vorbestimmen einer Beziehung oder Kurve zwischen Position der Separatorführungseinheit (24) und Wert der zweiten Bahnspannung und/oder Position oder Stellung eines Spannungseinstellelements (50) und Steuern der zweiten Bahnspannung gemäß der vorbestimmten Beziehung oder Kurve entsprechend der aktuellen Position der Separatorführungseinheit (24);
d4) Ermitteln einer Beziehung oder Kurve zwischen Position der Separatorführungseinheit (24) und Wert der zweiten Bahnspannung und/oder Position oder Stellung eines Spannungseinstellelements (50) durch Vergleich mit einer Regelung, die die zweite Bahnspannung auf einen gewünschten Wert regelt und Abgleich mit der jeweils aktuellen Position der Separatorführungseinheit (24);
d5) Konstanthalten einer vorbestimmten zweiten Bahnspannung bei unterschiedlichen Positionen der Separatorführungseinheit (24);
d6) positionsgemäßes Steuern der zweiten Bahnspannung mittels einer positionsgesteuerten Tänzereinheit (60);
d7) Bewegen einer Tänzereinheit (60) in Abhängigkeit von der Position der Separatorführungseinheit (24), insbesondere so dass die zweite Bahnspannung auf einem vorbestimmten vorzugsweise konstanten Wert gehalten wird;
d8) Bereitstellen einer mit radialem Abstand zu einem Zentrum drehbar gelagerten Umlenkrolle (62) und Einstellen der Winkellage der Drehachse der Umlenkrolle (62) zu dem Zentrum abhängig von der Position der Separatorführungseinheit (24);
d9) Ausgleich von bei der Steuerung der zweiten Bahnspannung auftretenden Bahnspannungsschwankungen.

14. Steuerung (54) für eine Separatorbahnzuführeinrichtung (14) nach einem der Ansprüche 1 bis 7 oder eine Batteriezellherstellvorrichtung (10) nach Anspruch 8, dazu eingerichtet, die Separatorbahnzuführeinrichtung (14) zum Durchführen des Verfahrens nach einem der Ansprüche 9 bis 13 anzusteuern.

15. Computerprogramm enthaltend Anweisungen, die eine Einrichtung oder Vorrichtung (14, 10) nach einem der Ansprüche 1 bis 8 dazu veranlassen, das Verfahren nach einem der Ansprüche 9 bis 13 durchzuführen.

Fig. 1

20

α

16

44.1 (44.2)

F$_{out}$

F$_{in}$

**Fig. 2**

20

44.1

46

42.1

42.2

42.3

42.4

44.2

**Fig. 3**

22

70

50

62

64

68

66

**Fig. 4**

74

76.1

82.1

24

76.2

74

80.1  80.2

82.2

78

**Fig. 5**

72

Fig. 6

Fig. 7

Europäisches
Patentamt

European
Patent Office

Office européen
des brevets

**EUROPÄISCHER RECHERCHENBERICHT**

Nummer der Anmeldung

EP 25 17 2565

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 102 426 466 B1 (DATECHNOLOGY CO LTD [KR]) 29. Juli 2022 (2022-07-29) | 1-3,5-15 | INV. H01M10/04 |
| A | * das ganze Dokument * | 4 | H01M10/0583 |
| | ----- | | |

**RECHERCHIERTE SACHGEBIETE (IPC)**

H01M
B65H

Der vorliegende Recherchenbericht wurde für alle Patentansprüche erstellt

| Recherchenort | Abschlußdatum der Recherche | Prüfer |
|---|---|---|
| Den Haag | 28. August 2025 | Haaken, Willy |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2025

| Im Recherchenbericht angeführtes Patentdokument | Datum der Veröffentlichung | Mitglied(er) der Patentfamilie | Datum der Veröffentlichung |
|---|---|---|---|
| KR 102426466 B1 | 29-07-2022 | KR 102426466 B1 | 29-07-2022 |
| | | WO 2022203122 A1 | 29-09-2022 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3858771 A1
- EP 4258402 A1
- WO 2023072343 A1

- EP 2770569 A2
- DE 102018200958 A1
- US 20120110836 A1